# EUROPÄISCHE PATENTSCHRIFT

(11) **EP 1 250 279 B1**
(45) Veröffentlichungstag und Bekanntmachung des Hinweises auf die Patenterteilung: **26.11.2003**
(21) Anmeldenummer: 01909441.6
(22) Anmeldetag: 10.01.2001
(51) Int. Cl.: B65H 67/06, B65G 47/14

(54) **VERFAHREN ZUM VEREINZELN VON SPINNHÜLSEN AUS EINER UNGEORDNETEN ANSAMMLUNG UND VORRICHTUNG ZUR DURCHFÜHRUNG DES VERFAHRENS**
METHOD FOR PICKING SPOOLS FROM A DISORDERED GROUP AND A DEVICE FOR CARRYING OUT SAID METHOD
PROCEDE DE PRELEVEMENT DE BOBINOTS DANS UN AMAS DESORDONNE ET DISPOSITIF PERMETTANT DE METTRE EN OEUVRE LEDIT PROCEDE

(30) Priorität: 11.01.2000 DE 10000727
(43) Veröffentlichungstag der Anmeldung: 23.10.2002
(73) Patentinhaber: Wegner, Wolfgang, 19306 Neustadt-Glewe (DE)
(72) Erfinder: Wegner, Wolfgang, 19306 Neustadt-Glewe (DE)
(74) Vertreter: Jaap, Reinhard
(86) Internationale Anmeldenummer: DE0100068
(87) Internationale Veröffentlichungsnummer: WO01051398

(56) Entgegenhaltungen:
- EP-A- 0 607 837
- DE-A- 4 242 798
- DE-A- 19 538 208
- US-A- 2 629 483

## Beschreibung

Die Erfindung betrifft ein Verfahren nach dem Oberbegriff des Anspruchs 1 und eine Vorrichtung zur Durchführung des Verfahrens nach dem Oberbegriff des Anspruchs 5.

Spinnhülsen sind längliche Holzylinder mit konischen oder zylindrischen Abmessungen. Sie können einer entsprechenden Spinnmaschine nur im sortierten Zustand bereitgestellt werden und müssen daher, bevor sie in der Spinnmaschine zum Einsatz kommen, vereinzelt und anschließend den unterschiedlichen Durchmessern entsprechend ausgerichtet werden.

Aus der DE 195 38 208 A1 ist nun eine Sortiereinrichtung für Spinnhülsen bekannt, in der eine entsprechende Vereinzelungseinrichtung beschrieben ist. Diese Vereinzelungseinrichtung ist oberhalb einer Einzugseinrichtung der Spinnmaschine angeordnet und besteht aus einer zylindrischen, waagerecht angeordneten, drehbaren Vereinzelungstrommel, deren Maritelfläche aus axial orientierten Stäben besteht, wobei der Abstand zwischen je zwei Stäben so groß ist, dass sich dort Aufnahmetaschen für je eine Spinnhülse ergeben. Der untere Umfangsbereich der Vereinzelungstrommel ist von einem stationären Abdeckblech umgeben, welches das Herausfallen der Spinnhülsen verhindert. Durch die Drehung der Vereinzelungstrommel werden die ungeordnet im Inneren der Vereinzelungstrommel befindlichen Spinnhülsen durch die Aufnahmetaschen richtungsorientiert aufgenommen und an einer am oberen Ende des Abdeckbleches angeordneten Austragsrampe einzeln in Querrichtung ausgeworfen und weiter in Querrichtung, unter Ausnutzung der Schwerkraft, zu einer Längendreheinrichtung transportiert, welche die vereinzelten Spinnhülsen nach ihren unterschiedlichen Anfangs- und Enddurchmesser gleichmäßig ausgerichtet.

Dieses Verfahren weist eine Reihe von Nachteilen auf. So wird zum einen zum Transport der Spinnhülsen aus der Vereinzelungseinrichtung über die Längendreheinrichtung bis zur Aufsteckvorrichtung der Spinnmaschine fast ausschließlich deren Gewichtskraft genutzt, was eine entsprechende Einbauhöhe der Sortiervorrichtung voraussetzt. Das erfordert eine aufwendige Hebetechnik zum Befüllen der Vereinzelungstrommeln mit den Spinnhülsen. Auch ist die Befüllung der Aufnahmetaschen in der Vereinzelungstrommel schlecht, da nur Spinnhülsen aufgenommen werden, die zufällig parallel zu den Aufnahmetaschen liegen.
Weiterhin kann mit einer Vereinzelungstrommel nur eine Spinnmaschine mit Spinnhülsen versorgt werden.
Außerdem beinhaltet das bekannte Verfahren viele Übergabestationen für die Spinnhülsen, wie die Befüllung der Sortiertrommel, die Anordnung in die Aufnahmetaschen, der Auswurf aus der Sortiertrommel und die Übergabe an die Wendeeinrichtung. Alle diese Übergabestationen produzieren Unregelmäßigkeiten im Transport der Spinnhülsen und können zu Störungen des Spinnhülsentransportes bzw. bei ihrer Sortierung führen. Diese Unregelmäßigkeit und die geringe Transportkapazität der Vereinzelungsvorrichtung führen zu einer unzureichenden Versorgung der Spinnmaschine. Daher macht sich der Einsatz einer zusätzlichen Puffereinrichtung erforderlich. Das verteuert wiederum die Sortieranlage.
Nachteilig ist weiterhin die aufwendige und damit teure Bauweise der Sortiertrommel.

Der Erfindung liegt daher die Aufgabe zu Grunde, ein gattungsgemäßes Verfahren und eine Vorrichtung zur Durchführung dieses Verfahrens zu entwickeln, welches mit einer vereinfachten Ausführung einer Vereinzelungseinrichtung, eine hohe kapazitive und kontinuierliche Bereitstellung der Spinnhülsen ermöglicht.

Die verfahrensseitige Aufgabe wird durch die kennzeichnenden Merkmale des Anspruches 1 gelöst. Vorteilhafte Verfahrensmöglichkeiten ergeben sich aus den Unteransprüchen 2 bis 4.
Vorrichtungsseitig wird die Aufgabe durch die kennzeichnenden Merkmale des Anspruchs 5 gelöst, wobei die Unteransprüche 6 bis 14 vorteilhafte Ausgestaltungsmöglichkeiten beinhalten.

Die Erfindung beseitigt die genannten Nachteile des Standes der Technik.
Zweckmäßig ist es, den ersten Transport der Spinnhülsen gegen die sich bewegende Seitenwand, durch eine schiefe Ebene zu erzwingen. Eine solche einfache Ausführung ist kostengünstig, bedarf keiner zusätzlichen Energiezuführung und ist störungsfrei. Eine Vergrößerung des Neigungswinkels der schiefen Ebene im Bereich der bewegten Seitenwand erhöht dort die Bewegungsfreiheit der Spinnhülsen, die dann durch die Bewegung der Seitenwand leicht parallel zur Seitenwand ausgerichtet und vereinzelt werden können.
Weiterhin ist vorteilhaft, die bewegte Seitenwand als Drehscheibe auszuführen. Als Antrieb für die Drehscheibe kann dann das im unteren Umfangsbereich der Drehscheibe teilweise anliegende Förderband genutzt werden, wodurch auch hier ein zusätzlicher Antrieb nicht benötigt wird. Vorteilhaft ist dabei, wenn an der Drehscheibe flexible Rührelemente angeordnet sind, die für eine ständige Bewegung der Spinnhülsen und damit für einen kontinuierlichen Verfahrensablauf sorgen. Diese Rühreinrichtung kann einfacherweise als eine Gummibeschichtung auf der Drehscheibe, als Gumminoppen oder als aufblasbare Gummibeschichtung ausgeführt sein.
Für den Abtransport der in axialer Richtung gleichgerichteten und vereinzelten Spinnhülsen ist es günstig, die entsprechenden Mitnehmer auf dem Förderband anzuordnen, wobei die Mitnehmer nicht die gesamte Breite des Förderbandes einnehmen, sodass ein Bereich für den Kontakt mit der Drehscheibe erhalten bleibt. Eine solche Ausführung hat den Vorteil, dass für den Transport der Spinnhülsen zu weiteren Prozessschritten das gleiche Förderband genutzt werden kann und damit keine Übergabestationen notwendig sind. die die Wahrscheinlichkeit von Störungen im Transport erhöhen.
Eine zweiteilige Ausführung von Vorratsbehälter und Fördereinrichtung, wobei die Fördereinrichtung stationär und der Vorratsbehälter fahrbar ausgeführt sind, ist in sofern vorteilhaft, dass der Vorratsbehälter gleichermaßen als Transportwagen genutzt werden kann. Für den Transport sind die Austrittsöffnungen des Vorratsbehälters dann lediglich durch Schieber verschlossen.
Ein wesentlicher Vorteil ergibt sich daraus, dass einem Vorratsbehälter zwei Fördereinrichtungen zugeordnet werden können. Es können somit bei geringem Platzbedarf und in einfacher, kostengünstiger Weise zwei Spinnmaschinen bzw. eine Spinnmaschine mit zwei getrennten Einzügen gleichzeitig mit Spinnhülsen versorgt werden.

Es versteht sich. dass an Stelle der Spinhülsen auch mit Garn umwikelte Spulen verwendet werden können, um Spulmaschinen zu versorgen.

Die Erfindung soll anhand eines Ausführungsbeispieles näher erläutert werden.
Dazu zeigt:

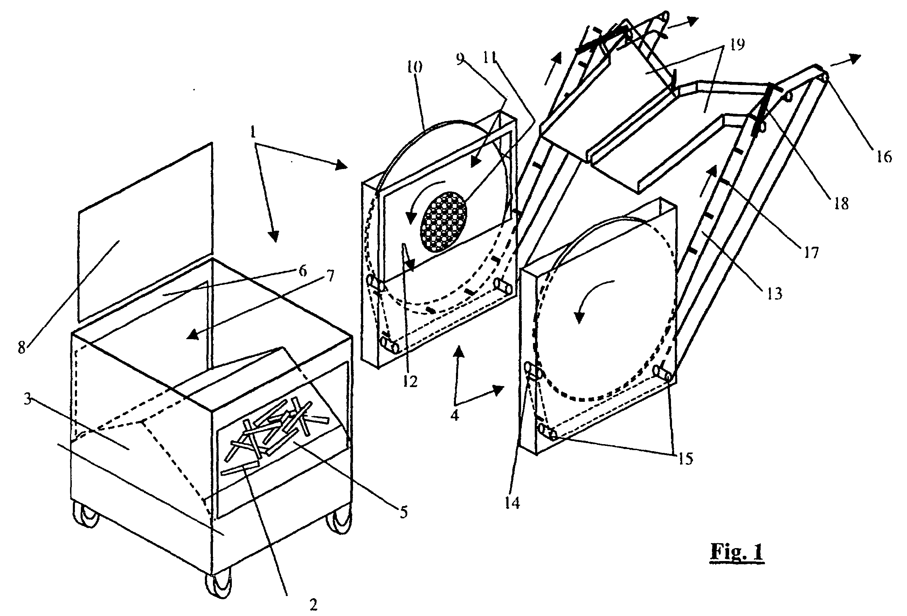

- Fig. 1:: eine zweiseitige Vereinzelungseinrichtung mit einem fahrbaren Vorratsbehälter für konische Spinnhülsen

Die Vereinzelungseinrichtung 1 für Spinnhülsen 2 setzt sich aus einem Vorratsbehälter 3 und zwei Fördereinrichtungen 4 zusammen.
Der Vorratsbehälter 3 ist kistenförmig ausgebildet und besitzt daher eine Bodenfläche 5 und vier Seitenflächen. Nach oben ist der Vorratsbehälter 3 offen. Die Bodenfläche 5 ist dachförmig ausgeführt mit einem First, zwei geneigten Dachflächen und zwei Traufen, wobei jede geneigte Dachfläche zwei unterschiedliche Neigungswinkel besitzt. Dabei ist der Neigungswinkel ab dem First kleiner als in der Nähe der Traufe.
Zwei gegenüberliegende Seitenwände 6 sind jeweils mit einer Austrittsöffnung 7 versehen, die viereckig und größtmöglichst gestaltet sind und so ausgeführt sind, dass die Unterkanten der Austrittsöffnungen 7 mit den Traufenkanten der dachförmigen Bodenfläche 5 in einer Höhe liegen. Jede Austrittsöffnung 7 ist mit einem Schieber 8 verschließbar ausgeführt.

Den beiden Seitenwänden 6 mit den Austrittsöffnungen 7 des Vorratsbehälters 3 ist je eine Fördereinrichtung 4 zugeordnet. Diese Fördereinrichtungen 4 sind stationär auf dem Boden angeordnet und so voneinander beabstandet, dass der Vorratsbehälter 3, mit seinen offenen Seitenwänden 6 zu je einer Fördereinrichtung 4 gewandt, spaltlos zwischen die Fördereinrichtungen 4 angeordnet werden kann.
Die eine Fördereinrichtung 4 ist zur anderen spiegelbildlich ausgeführt, weswegen im Weiteren nur eine Fördereinrichtung 4 beschrieben wird.
Die Fördereinrichtung 4 ist in ihrer Größe der offenen Seitenfläche 6 des Vorratsbehälters 3 angepasst.
Die der Austrittsöffnung 7 des Vorratsbehälters 3 zugewandte Gehäuseseite der Fördereinrichtung 4 weist eine Einlassöffnung 9 auf, die in Größe und Form auf die Austrittsöffnung 7 abgestimmt ist.

Im Inneren der Fördereinrichtung 4 ist nahe der der Einlassöffnung 9 gegenüberliegenden Gehäuseseite der Fördereinrichtung 4 eine vertikal ausgerichtete Drehscheibe 10 gelagert. wobei der Drehpunkt der Drehscheibe 10 etwas oberhalb der Unterkante der Einlassöffnung 9 liegt und die Drehscheibe 10 einen Durchmesser aufweist, der geringfügig größer ist als die Breite der Einlassöffnung 9.
An der der Einlassöffnung 9 zugewandten Seite der Drehscheibe 10 ist rotationssymmetrisch eine Gummibeschichtung 11 mit Noppen aufgeklebt. Der Radius dieser Gummibeschichtung 11 ist dabei maximal dem Abstand von der Drehachse der Drehscheibe 10 zur Unterkante der Einlassöffnung 9.
Zwischen der Drehscheibe 10 und der Gehäusefläche unterhalb der Einlassöffnung 9 bildet sich ein Einfallschacht 12 zur Aufnahme von parallel zu Drehscheibe ausgerichteter Spinnhülsen 2 aus. welcher in seiner Breite auf den größten Durchmesser einer Spinnhülse 2 angepasst ist. Der Einfallschacht 12 ist unten durch ein Förderband 13 geschlossen, welches dem Transport der vereinzelten Spinnhülsen 2 zu einer Längendreheinrichtung dient. Dazu wird das Förderband 13 über Umlenkrollen 14, 15, 16 so geführt, dass es außerhalb des Einfallschachtes 12 in eine für die erforderliche Längendreheinrichtung notwendige Höhe führt. Die Umlenkrolle 14 liegt dazu auf Höhe der Unterkante der Einlassöffnung 9 und zwei weitere Umlenkrollen 15 in Bodennähe in der Fördereinrichtung 4. Außerdem ist das Förderband 13 so ausgelegt, dass es mit der Drehscheibe 10 im Reibschluss steht und diese somit antreibt. Auf dem Förderband 13 sind Mitnehmer 17 mit einem Abstand angeordnet, der größer ist als die Länge eine Spinnhülse 2, wobei diese Mitnehmer 17 nicht die gesamte Breite des Förderbandes 13 einnehmen und somit Platz für die Auflage der Drehscheibe 10 gegeben ist. Angetrieben wird das Förderband 13 durch einen nicht dargestellten, in der Fördertechnik üblichen Elektromotor.

Das Förderband 13 verlässt die Fördereinrichtung 4 mit einer Steigung von etwa 45°, wobei nicht dargestellte Leitbleche seitlich am Förderband 13 angeordnet sind. Über dem Förderband 13 befindet sich, in einer Höhe in der das Förderband 13 schon über der Oberkante des Vorratsbehälters 3 verläuft, ein schräg zum Förderband 13 angeordneter, besenartiger Abstreifer 18, der nicht regulär zwischen zwei Mitnehmern 17 liegende Spinnhülsen 2 auf eine Rutsche 19 befördert, wobei die Rutsche 19 nach unten, zurück in den Vorratsbehälter 3 führt.

Im Folgenden soll das Verfahren zum Vereinzeln von Spinnhülsen beschrieben werden.
Zunächst werden die Spinnhülsen 2 ungeordnet in den Vorratsbehälter 3 gegeben, wobei die Austrittsöffnungen 7 durch die herausnehmbaren Schieber 8 verschlossen sind. Der Vorratsbehälter 3 wird nun zwischen die beiden Fördereinrichtungen 4 geschoben. Die Fördereinrichtungen 4 und der Vorratbehälter 3 stehen dann eng aneinander, wobei sich die Austrittsöffnungen 7 gegenüber den Einlassöffnungen 9 der Fördereinrichtungen 4 befinden.
Als Nächstes werden die herausnehmbaren Schieber 8 entfernt und somit der Weg in die Fördereinrichtungen 4 für die Spinnhülsen 2 freigegeben. Durch die geneigte, dachartige Bodenfläche 5 des Vorratsbehälters 3 rutschen die ungeordneten Spinnhülsen 2 eigenständig in Richtung der Fördereinrichtungen 4.

In der Fördereinrichtung 4 rutschen die ungeordneten Spinnhülsen 2 im ersten Transport in Richtung der Drehscheibe 10. In Längsrichtung parallel zur Drehscheibe 10 ausgerichtete Spinhülsen 2 fallen dann sofort in den Einfallschacht 15. Die Spinnhülsen 2, die nicht parallel zur Drehscheibe liegen stoßen mit ihren Stirnseiten gegen die Drehscheibe 10 und werden dann aufgrund der Bewegung der Drehscheibe so gedreht, dass sie eine parallele Lage zur Drehscheibe 10 erfahren und in den Einfallschacht fallen können. Begünstigt wird das Drehen der Spinnhülsen in eine parallele Lage zum Einfallschacht 12 durch die höhere Bewegungsfreiheit der Spinnhülsen 2 in Traufennähe und durch die Gummibeschichtung 11 an der Drehscheibe 10, welche aufgrund der hohen Reibwerte zwischen ihr und den Spinnhülsen 2 in der Lage ist die Spinnhülsen 2 in Bewegung zu halten. Als bewegte Schachtwand verhindert die Drehscheibe 10 mit der Gummibeschichtung 11 so das Verklemmen bzw. eine Brückenbildung der Spinnhülsen 2 am Schachteingang.
Beim Eintritt in den Einfallschacht 12 erfahren die Spinnhülsen 2 eine erste Lageorientierung, denn sie werden im Einfallschacht 12 gezwungen sich in einer vertikalen Ebene anzuordnen.
Auf dem Boden des Einfallschachtes 12 erfolgt nun eine zweite Lageorientierung, indem sich die Spinnhülsen 2 auf das laufende Förderband 13 zwischen die Mitnehmer 17 legen. Von diesem Moment an sind diese Spinnhülsen 2 in einer Linie angeordnet und werden vom Förderband 13 aus dem Einfallschacht 12 in einem zweiten Transport einzeln hinausbefördert. Um beim Ausgang aus dem Einfallschacht 12 ein Verklemmen der Spinnhülsen 2 zu vermeiden, ist die Öffnung, aus die das Förderband 13 den Einfallschacht 12 verlässt entsprechend groß. Aus diesem Grund ist es aber auch möglich, dass zwei oder mehrere Spinnhülsen 2 übereinander auf dem Förderband 13 liegend den Einfallschacht 12 verlassen. Aufgrund des schräg nach oben verlaufenden Förderbandes 13 und der entsprechend geringen Höhe der Mitnehmer 17 rutschen diese aufliegenden Spinnhülsen 2 aber wieder zurück in den Einfallschacht 12. Sollte ein Zurückrutschen der Spinnhülsen 2 aufgrund von Platzmangel im Einfallschacht 12 nicht möglich sein, so erreichen die aufliegenden Spinnhülsen 2 schließlich eine Höhe über der Oberkante des Vorratsbehälters 3 und damit den besenartigen Abstreifer 18, der die aufliegenden Spinnhülsen 2 so ablenkt, dass sie auf die Rutsche 19 fallen, welche zurück in den Vorratsbehälter 3 führt. Dabei sorgen nicht zeichnerisch dargestellte, seitliche Leitbleche am Förderband 13 dafür, dass die Spinnhülsen 2 das Förderband 13 vorher nicht verlassen können.
Die regulär zwischen zwei Mitnehmern 17 auf dem Förderband 13, in einer Linie aber undefiniert in der Ausrichtung bezüglich ihres kleinen und großen Durchmessers auf dem Förderband 13 transportierten Spinnhülsen 2 gelangen nun auf dem Förderband 13 zu einer nicht näher gezeigten Längendreheinrichtung, in der die Spinnhülsen 2 nach ihren Durchmessern ausgerichtet werden.

### Liste der Bezugszeichen

- 1: Vereinzelungseinrichtung
- 2: Spinnhülsen
- 3: Vorratsbehälter
- 4: Fördereinrichtung
- 5: Bodenfläche
- 6: gegenüberliegende Seitenwand
- 7: Austrittsöffnung
- 8: Schieber
- 9: Einlassöffnung
- 10: Drehscheibe
- 11: Gummibeschichtung
- 12: Einfallschacht
- 13: Förderband
- 14: Umlenkrolle (oben)
- 15: Umlenkrolle (unten)
- 16: Umlenkrolle (außen)
- 17: Mitnehmer
- 18: Abstreifer
- 19: Rutsche

## Patentansprüche

1. Verfahren zum Vereinzeln von Spinnhülsen aus einer ungeordneten Ansammlung, die nachfolgend zu einer Längendreheinrichtung transportiert werden,
**dadurch gekennzeichnet, dass**
- die ungeordneten Spinnhülsen (2) in einem ersten Transport gegen eine sich quer zur Transportrichtung der Spinnhülsen (2) bewegende Seitenwand bewegt werden,
- die nicht in Längsrichtung parallel zur Bewegungsrichtung der Seitenwand liegenden Spinnhülsen (2) durch die Bewegung der Seitenwand in die Bewegungsrichtung der Seitenwand gedreht werden,
- alle Spinnhülsen (2) nacheinander in die Bewegungsrichtung der Seitenwand vereinzeln werden und
- alle Spinnhülsen (2) in einem zweiten Transport einzeln und nacheinander in die Bewegungsrichtung der Seitenwand bewegt werden.

2. Verfahren nach Anspruch 1,
**dadurch gekennzeichnet, dass** der erste Transport der Spinnhülsen (2) gegen die Seitenwand durch die eigene Schwerkraft und durch eine schiefe Ebene erfolgt.

3. Verfahren nach Anspruch 1,
**dadurch gekennzeichnet, dass** die Seitenwand eine Drehbewegung ausführt und die Bewegung der Spinnhülsen (2) beim zweiten Transport zur Längendreheinrichtung tangential zur Drehbewegung der Seitenwand ausgerichtet ist.

4. Verfahren nach Anspruch 3,
**dadurch gekennzeichnet, dass** die Drehbewegung der Seitenwand auf die ungeordnete Ansammlung von Spinndüsen (2) übertragen wird.

5. Vorrichtung zum Vereinzeln von Spinnhülsen aus einer ungeordneten Ansammlung, bestehend aus einem Vorratsbehälter (3) für die Spinnhülsen (2) und einer vom Vorratsbehälter (3) versorgten Vereinzelungseinrichtung (1) mit einem zu einer Längendreheinrichtung führendem Förderband (13),
**dadurch gekennzeichnet, dass** der Vorratsbehälter (3) mindestens eine offene Seitenwand (6) und eine Einrichtung zum ersten Transport der Spinnhülsen (2) in Richtung der offenen Seitenwand (6) besitzt und die offene Seitenwand (6) durch ein Bewegungsteil abgedeckt ist, wobei der Bewegungsteil eine quer zur ersten Transportrichtung der Spinnhülsen (2) liegende Bewegungsrichtung und Elemente zur Aufnahme und zu einem zweiten Transport einzelner Spinnhülsen (2) zur Längendreheinrichtung aufweist und die Elemente zur Aufnahme und zum zweiten Transport der Spinnhülsen (2) für eine Gleichrichtung von Bewegungsteil und Spinnhülsen (2) ausgelegt sind.

6. Vorrichtung nach Anspruch 5,
**dadurch gekennzeichnet, dass** die Einrichtung zum ersten Transport der Spinnhülsen (2) aus einer in Richtung der offenen Seitenwand (6) geneigten Bodenfläche (5) besteht.

7. Vorrichtung nach Anspruch 6,
**dadurch gekennzeichnet, dass** die Bodenfläche (5) zwei unterschiedliche Neigungswinkel besitzt, wobei der am nächsten zur offenen Seitenwand (6) liegende Neigungswinkel am größten ist.

8. Vorrichtung nach Anspruch 5,
**dadurch gekennzeichnet, dass** der Bewegungsteil eine Drehscheibe (10) ist.

9. Vorrichtung nach Anspruch 8,
**dadurch gekennzeichnet, dass** der Drehscheibe (10) auf der zum Vorratsbehälter (3) liegenden Seite ein Förderband (13) beigeordnet ist und die Elemente zur Aufnahme und zum zweiten Transport der Spinnhülsen (2) sich auf dem Förderband (13) befinden.

10. Vorrichtung nach Anspruch 9,
**dadurch gekennzeichnet, dass** die Drehscheibe (10) und das Förderband (13) in einem gemeinsamen Gehäuse einer Fördereinrichtung (4) untergebracht sind und das Gehäuse auf der zum Vorratsbehälter (3) liegenden Seite einen in der Tiefe vom Förderband (13) begrenzten Einfallschacht (12) besitzt, der über eine höherliegende Einlassöffnung (9) Verbindung zum Vorratsbehälter (3) besitzt.

11. Vorrichtung nach Anspruch 10,
**dadurch gekennzeichnet, dass** die Drehscheibe (10) im Bereich der Einlassöffnung (9) der Fördereinrichtung (4) eine Rühreinrichtung für die im Vorratsbehälter (3) befindlichen Spinnhülsen (2) besitzt.

12. Vorrichtung nach Anspruch 11,
**dadurch gekennzeichnet, dass** die Rühreinrichtung aus einem oder mehreren feststehenden oder flexiblen Elementen besteht.

13. Vorrichtung nach den Ansprüchen 5-12,
**dadurch gekennzeichnet, dass** der Vorratsbehälter (3) und die Fördereinrichtung (4) als zweigeteilte Einheiten ausgeführt sind und dazu der Vorratsbehälter (3) fahrbar ist und eine Austrittsöffnung (7) besitzt, die in ihrer Anordnung und ihren Abmessungen auf die Einlassöffnung (9) der Fördereinrichtung (4) abgestimmt ist und die durch einen Schieber (8) verschließbar ausgeführt ist.

14. Vorrichtung nach Anspruch 13,
**dadurch gekennzeichnet, dass** dem Vorratsbehälter (3) zwei gegenüberliegende Fördereinrichtungen zugeordnet sind und der Vorratsbehälter (3) dazu eine dachartige Bodenfläche (9) und zwei gegenüberliegende Austrittsöffnungen (7) besitzt.

## Claims

1. Method of sorting spinning tubes from a disordered pile, which are then fed to a lengthwise turning device,
**characterized in that**
- the disordered spinning tubes (2) in a first feed operation are moved towards a side wall moving at right angles to the feed direction of the spinning tubes (2),
- the spinning tubes (2) that are not lying in longitudinal direction parallel to the direction of motion of the side wall are turned by the motion of the side wall into the direction of motion of the side wall,
- all of the spinning tubes (2) are successively sorted into the direction of motion of the side wall and
- all of the spinning tubes (2) in a second feed operation are moved individually and in succession into the direction of motion of the side wall.

2. Method according to claim 1,
**characterized in that** the first feed of the spinning tubes (2) towards the side wall is effected by means of the inherent gravitational force and by means of an inclined plane.

3. Method according to claim 1,
**characterized in that** the side wall executes a turning motion and the motion of the spinning tubes (2) during the second feed to the lengthwise turning device is aligned tangentially relative to the turning motion of the side wall.

4. Method according to claim 3,
**characterized in that** the turning motion of the side wall is transmitted to the disordered pile of spinning tubes (2).

5. Apparatus for sorting spinning tubes from a disordered pile, comprising a storage bin (3) for the spinning tubes (3) and a sorting device (1), which is supplied from the storage bin (3) and has a conveyor belt (13) leading to a lengthwise turning device,
**characterized in that** the storage bin (3) has at least one open side wall (6) and a device for effecting the first feed of the spinning tubes (2) in the direction of the open side wall (6) and the open side wall (6) is covered by a motion part, wherein the motion part has a direction of motion, which lies at right angles to the first feed direction of the spinning tubes (2), and has elements for receiving and effecting a second feed of individual spinning tubes (2) to the lengthwise turning device and the elements for receiving and effecting the second feed of the spinning tubes (2) are designed for a uniform alignment of motion part and spinning tubes (2).

6. Apparatus according to claim 5,
**characterized in that** the device for effecting the first feed of the spinning tubes (2) comprises a base surface (5) inclined in the direction of the open side wall (6) .

7. Apparatus according to claim 6,
**characterized in that** the base surface (5) has two different angles of inclination, wherein the angle of inclination situated nearest to the open side wall (6) is the greatest.

8. Apparatus according to claim 5,
**characterized in that** the motion part is a rotatable disk (10) .

9. Apparatus according to claim 8,
**characterized in that** a conveyor belt (13) is associated with the rotatable disk (10) at the side facing the storage bin (3) and the elements for receiving and effecting the second feed operation of the spinning tubes (2) are situated on the conveyor belt (13).

10. Apparatus according to claim 9,
**characterized in that** the rotatable disk (10) and the conveyor belt (13) are accommodated in a common housing of a feed device (4) and the housing at the side facing the storage bin (3) has a drop-in shaft (12), which is delimited in depth by the conveyor belt (13) and is connected by a higher-lying inlet opening (9) to the storage bin (3).

11. Apparatus according to claim 10,
**characterized in that** the rotatable disk (10) in the region of the inlet opening (9) of the feed device (4) has an agitating device for the spinning tubes (2) situated in the storage bin (3).

12. Apparatus according to claim 11,
**characterized in that** the agitating device comprises one or more fixed or flexible elements.

13. Apparatus according to claims 5-12,
**characterized in that** the storage bin (3) and the feed device (4) are designed as units divided in two and moreover the storage bin (3) is movable and has an outlet opening (7), which in terms of its arrangement and dimensions is adapted to the inlet opening (9) of the feed device (4) and which is designed so as to be closable by means of a slide (8).

14. Apparatus according to claim 13,
**characterized in that** two opposite feed devices are associated with the storage bin (3) and the storage bin (3) moreover has a roof-like base surface (9) and two opposite outlet openings (7).

## Revendications

1. Procédé pour isoler des fllières d'une accumulation non ordonnée qui seront par la suite transportées vers un dispositif de tournage en longueur,
**caractérisé en ce que**
- les filières non ordonnées (2) sont déplacées dans un premier système de transport contre une paroi latérale se déplaçant transversalement par rapport à la direction des filières (2),
- les filières (2) dont le sens longitudinal n'est pas parallèle à la direction de déplacement de la paroi latérale, sont tournées par le mouvement de la paroi latérale en direction du mouvement de la paroi latérale,
- toutes les filières (2) sont isolées les unes après les autres en direction du mouvement de la paroi latérale et
- toutes les filières (2) sont déplacées dans un deuxième transport, isolées et les unes après les autres, en direction du mouvement de la paroi latérale.

2. Procédé selon la revendication 1,
**caractérisé en ce que**
le premier transport des filières (2) se réalise contre la paroi latérale par leur propre force de pesanteur et par un plan incliné.

3. Procédé selon la revendication 1.
**caractérisé en ce que**
la paroi latérale effectue un mouvement de rotation et le mouvement des filières (2) dans le deuxième transport vers le dispositif de tournage en longueur est aligné de façon tangentielle au mouvement de rotation de la paroi latérale.

4. Procédé selon la revendication 3,
**caractérisé en ce que**
le mouvement de rotation de la paroi latérale est transmis à l'accumulation non ordonnée de filières (2).

5. Dispositif pour isoler des filières d'une accumulation non ordonnée, se constituant d'un réservoir d'approvisionnement (3) pour les filières (2) et d'un dispositif d'isolement (1) alimenté par le réservoir d'approvisionnement (3) avec une courroie de transport (13) conduisant à un dispositif de tournage en longueur,
**caractérisé en ce que**
le réservoir d'approvisionnement (3) possède au moins une paroi latérale ouverte (6) et un dispositif pour le premier transport des filières (2) en direction de la paroi latérale ouverte (6), et la paroi latérale ouverte (6) est couverte par une pièce de mouvement, la pièce de mouvement présentant une direction de mouvement transversale à la première direction de transport des filières (2) et des éléments pour le ramassage et pour un deuxième transport des filières (2) isolées vers le dispositif de tournage en longueur, et les éléments pour le ramassage et pour le deuxième transport des filières (2) sont aménagés pour un alignement de la pièce de mouvement et des filières (2).

6. Dispositif selon la revendication 5,
**caractérisé en ce que**
le dispositif pour le premier transport des filières (2) se constitue d'une surface de sol (5) inclinée en direction de la paroi ouverte (6).

7. Dispositif selon la revendication 6,
**caractérisé en ce que**
la surface de sol (5) possède deux angles d'inclinaison différents, l'angle d'inclinaison le plus proche de la paroi latérale ouverte (6) étant le plus grand.

8. Dispositif selon la revendication 5,
**caractérisé en ce que**
la pièce de mouvement est une plaque de rotation (10).

9. Dispositif selon la revendication 8,
**caractérisé en ce que**
la plaque de rotation (10) est disposée contre le côté d'une courroie de transport (13) dirigé vers le réservoir d'approvisionnement (3), et les éléments pour le ramassage et pour le deuxième transport des filières (2) figurent sur la courroie de transport (13).

10. Dispositif selon la revendication 9,
**caractérisé en ce que**
la plaque tournante (10) et la courroie de transport (13) sont logées dans un boîtier commun d'un dispositif de transport (4), et le boîtier possède, au côté dirigé vers le récipient d'approvisionnement (3), un regard d'introduction (12) limité en profondeur par la courroie de transmission (13), possédant une liaison avec le réservoir d'approvisionnement (3) par une ouverture d'introduction (9) figurant plus haut.

11. Dispositif selon la revendication 10,
**caractérisé en ce que**
la plaque tournante (10) possède, dans la zone de l'ouverture d'introduction (9) du dispositif de transport (4), un dispositif agitateur pour les filières (2) figurant dans le réservoir d'approvisionnement (3).

12. Dispositif selon la revendication 11,
**caractérisé en ce que**
le dispositif agitateur se constitue d'un ou de plusieurs éléments fixes ou souples.

13. Dispositif selon l'une quelconque des revendications 5 à 12,
**caractérisé en ce que**
le réservoir d'approvisionnement (3) et le dispositif de transport (4) sont réalisés en tant qu'unités séparées en deux, et le réservoir d'approvisionnement (3) puisse circuler et possède une ouverture d'évacuation (7) adaptée par son emplacement et par ses dimensions à l'ouverture d'introduction (9) du dispositif de transport (4), et qui peut être obturée par une plaque coulissante (8).

14. Dispositif selon la revendication 13,
**caractérisé en ce que**
deux dispositifs de transport figurant l'un en face de l'autre sont adjoints au réservoir d'approvisionnement (3), et le réservoir d'approvisionnement (3) possède en outre une surface de sol (9) en forme de toit et deux ouvertures d'évacuation (7) l'une en face de l'autre.
